# FASCICULE DE BREVET EUROPEEN

(11) **EP 3 858 704 B1**
(45) Date de publication et mention de la délivrance du brevet: **05.04.2023**
(21) Numéro de dépôt: 21155011.6
(22) Date de dépôt: 03.02.2021
(51) Int. Cl.: B61D 37/00, A47B 13/10, A47B 77/02, A47F 10/06, B60N 3/00, B60N 3/16, B60N 3/18, B64D 11/04

(54) **MOBILIER DE VÉHICULE À ACCESSIBILITÉ AMÉLIORÉE ET VÉHICULE ASSOCIÉ**
MOBILIAR FÜR FAHRZEUG MIT VERBESSERTER ZUGÄNGLICHKEIT UND ENTSPRECHENDES FAHRZEUG
FURNITURE FOR A VEHICLE WITH IMPROVED ACCESSIBILITY AND ASSOCIATED VEHICLE

(30) Priorité: 03.02.2020 FR 2001045
(43) Date de publication de la demande: 04.08.2021
(73) Titulaire: SpeedInnov, 75008 Paris (FR)
(72) Inventeur: LANOE, Stéphane, 17000 La Rochelle (FR); LOUMEAUD, Arnaud, 17430 Tonnay Charente (FR)
(74) Mandataire: Lavoix

(56) Documents cités:
- CN-A- 106 379 352
- CN-U- 209 395 802
- DD-A3- 125 508
- PFLUGHAUPT G: "LES VEHICULES DEDIES A LA RESTAURATION", REVUE GÉNÉRALE DES CHEMINS DE FER : RCGF, HC ÉDITIONS, FR, no. 7 / 08, 1 juillet 1993 (1993-07-01), pages 23-24, XP000383549, ISSN: 0035-3183

## Description

La présente invention concerne un mobilier destiné à équiper un véhicule selon la revendication 1. L'invention concerne également un véhicule comprenant le mobilier précédent.

Les véhicules destinés à accueillir des voyageurs, et notamment les véhicules ferroviaires, comprennent généralement des équipements de restauration à destination des voyageurs, par exemple des fours à micro-onde ou des cafetières, pour leur permettre de préparer des repas et des boissons chaudes.

Notamment, dans le cas de véhicules comprenant un espace dédié à la restauration, comme une voiture bar ou un espace cuisine, ces équipements sont en libre-service pour permettre aux voyageurs de préparer eux-mêmes leur collation sans avoir à attendre l'intervention du personnel de bord.

Il est connu de disposer plusieurs tels équipements de restauration sur un mobilier comme décrit plus haut, par exemple situé dans l'espace de restauration. Les équipements sont agencés voisins les uns des autres, afin de réduire les déplacements nécessaires aux voyageurs et afin d'économiser l'espace occupé dans le véhicule.

Cependant, ces mobiliers ne donnent pas entière satisfaction. En effet, dans un espace confiné comme une voiture de véhicule ferroviaire, il est souvent difficile d'agencer plusieurs équipements en accès libre de façon à les rendre accessibles simultanément par plusieurs passagers. La présence de passagers devant certains équipements disposés sur le mobilier rend souvent malaisé l'accès aux autres équipements. Le document DD 125 508 A3 décrit par exemple du mobilier pour voiture-restaurant permettant un passage aisé des voyageurs en proposant un plateau de table avec des régions en retrait pour les convives assis à la table.

Un but de l'invention est ainsi de fournir un mobilier simplifiant l'accès simultané à une pluralité d'équipements par les passagers dans un espace restreint.

A cet effet, l'invention a pour objet un mobilier selon la revendication 1.

Un tel mobilier permet de réduire la gêne pour les voyageurs pour accéder aux équipements disposés sur le mobilier, occasionnée par la présence d'autres voyageurs devant les autres équipements.

Selon des modes de réalisation particuliers, le mobilier selon l'invention présente l'une ou plusieurs des caractéristiques selon les revendications 1 à 5 et 9, prise(s) isolément ou selon toute combinaison techniquement réalisable.

L'invention a également pour objet un véhicule selon la revendication 6.

Selon des modes de réalisation particuliers, le véhicule selon l'invention présente l'une ou plusieurs des caractéristiques selon les revendications 7 et 8, prise(s) isolément ou selon toute combinaison techniquement réalisable.

L'invention sera mieux comprise à la lecture de la description qui va suivre, donnée uniquement à titre d'exemple et faite en se référant aux dessins annexés, parmi lesquels :
- [Fig 1] la figure 1 est une vue de dessus d'un véhicule selon l'invention ; et
- [Fig 2] la figure 2 est une vue de dessus d'un véhicule selon une variante de réalisation de l'invention.

La description qui suit est faite en référence à une direction longitudinale X, orientée selon le sens de déplacement normal du véhicule, une direction transversale Y horizontale et orthogonale à la direction longitudinale X, et une direction d'élévation Z verticale, orthogonale aux directions longitudinale X et transversale Y.

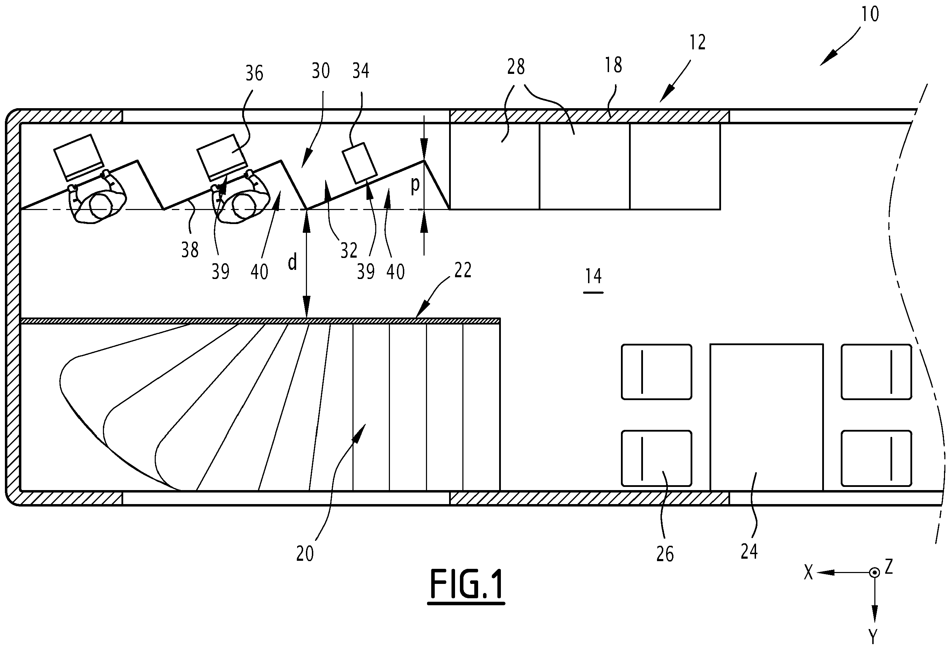

Un véhicule 10 est représenté partiellement sur la figure 1 en coupe transversale selon un plan horizontal XY.

Dans tout ce qui suit, par les termes « sensiblement selon une direction », « sensiblement parallèle » et « sensiblement perpendiculaire », on entend respectivement « selon une direction », « parallèle à » et « perpendiculaire à » à 10° près, et notamment à 5° près.

Le véhicule 10 est par exemple un véhicule ferroviaire, notamment un train à grande vitesse, destiné à accueillir des passagers pour des trajets de moyenne et longue durée.

Le véhicule 10 comprend au moins une voiture 12, notamment une voiture restaurant, dédiée à la restauration des passagers du véhicule 10.

La voiture 12 est avantageusement une voiture à deux niveaux, comprenant un niveau inférieur 14 et un niveau supérieur, seul le niveau inférieur 14 étant représenté sur la figure 1.

La voiture 12 comprend des parois externes 18 définissant le niveau inférieur 14 et le niveau supérieur, ainsi qu'au moins un escalier 20 reliant le niveau inférieur 14 et le niveau supérieur, et des parois internes séparant différentes zones des niveaux inférieur 14 et supérieur.

Une telle paroi interne 22 est représentée sur la figure 1, longeant l'escalier 20 au niveau inférieur 14.

Le niveau inférieur 14 comprend des équipements disponibles en libre accès aux passagers, notamment des tables 24 et des chaises 26, ainsi que des distributeurs 28 de denrées alimentaires.

Le niveau inférieur 14 comprend de plus un mobilier 30 comprenant un plateau 32 ainsi que des équipements disposés sur le plateau 32, comprenant notamment au moins une machine à café 34 et au moins un four à micro-onde 36.

Le plateau 32 s'étend dans un plan XY sensiblement horizontal, parallèle à la direction longitudinale X et à la direction transversale Y.

Le plateau 32 est délimité par un bord d'accès 38, s'étendant face à la cabine, en regard de la paroi interne 22. Le bord d'accès 38 est le bord du plateau 32 devant lequel se tiennent les passagers désirant accéder aux équipements disposés sur le plateau 32.

Le bord d'accès 38 s'étend à une distance d de la paroi interne 22, mesurée selon la direction transversale Y, au point du bord d'accès 38 le plus proche de la paroi interne 22. La distance d est typiquement comprise entre 60 cm et 100 cm, par exemple 80 cm.

Chacun des équipements 34, 36 présente une face frontale 39, face à laquelle un passager utilisant l'équipement se tient. La face frontale 39 de chaque équipement 34, 36 disposé sur le plateau 32 s'étend au voisinage du bord d'accès 38, par exemple à une distance comprise entre 2 cm et 20 cm.

Le bord d'accès 38 définit une pluralité de régions en retrait 40, dans lesquelles le bord d'accès 38 s'étend à une distance supérieure à la distance d de la paroi interne 22.

Dans chaque région en retrait 40, le bord d'accès 38 s'étend à une distance de la paroi interne 22 égale à la distance d augmentée d'une profondeur p de la région en retrait 40.

La profondeur p est mesurée selon la direction transversale Y, au point du bord d'accès 38 le plus éloigné de la paroi interne 22. La profondeur p est typiquement comprise entre 10 cm et 30 cm, par exemple 15 cm.

La profondeur p de la région en retrait est donc la différence entre la distance entre la paroi interne 22 et le point du bord d'accès 38 le plus proche de cette paroi interne 22, et la distance entre la paroi interne 22 et le point du bord d'accès dans la région en retrait 40 le plus distant de cette paroi interne 22, mesurées selon la direction transversale Y.

Avantageusement, les régions en retrait 40 sont identiques les unes aux autres et présentent la même profondeur p. Cela permet de simplifier la réalisation du mobilier 30.

Chacun des équipements 34, 36 disposé sur le plateau 32 est agencé avec la face frontale 39 de l'équipement 34, 36 faisant face à une des régions en retrait 40.

Avantageusement, pour chaque région en retrait 40, un unique équipement 34, 36 est disposé sur le plateau 32 avec sa face frontale 39 en regard de la région en retrait 40. Cela permet d'améliorer encore l'accessibilité à chacun des équipements 34, 36.

Chaque région en retrait 40 définit un espace permettant à un passager utilisant l'équipement 34, 36 de se tenir en face de l'équipement 34, 36, en présentant une gêne réduite pour l'accès aux autres équipements 34, 36 par les autres passagers.

Dans le mode de réalisation représenté sur la figure 1, chaque section en retrait présente une forme sensiblement triangulaire dans le plan horizontal XY du plateau.

Notamment, le plus grand côté du triangle formé par chaque région en retrait 40 s'étend parallèlement à la paroi interne 22, en regard de celle-ci.

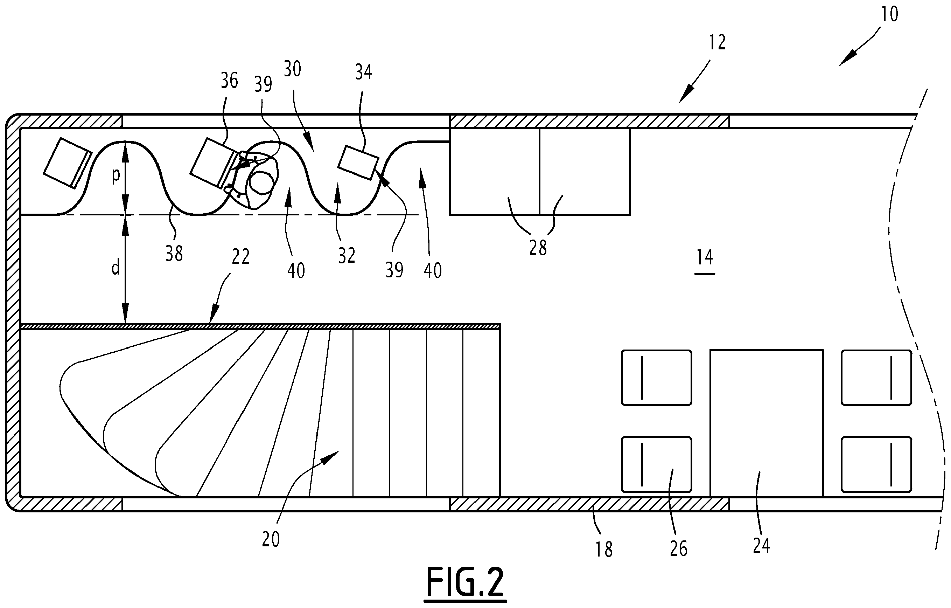

En variante, comme représenté sur la figure 2, les sections en retrait 40 présentent une géométrie arrondie, de sorte que le bord d'accès 38 s'étend de manière sensiblement sinusoïdale. Le bord d'accès 38 du plateau 32 selon cette variante ne comprend pas d'angles, ce qui présente des avantages en termes d'ergonomie et de sécurité, ainsi que du point de vue esthétique. Le mobilier 30 est cependant plus complexe à réaliser.

Plus généralement, les régions en retrait 40 peuvent présenter de nombreuses géométries distinctes, choisies en fonctions de critères ergonomiques et esthétiques.

En variante, le véhicule 10 est un véhicule maritime ou un véhicule aérien, destiné à transporter des passagers.

Le mobilier 30 selon l'invention permet de réduire la gêne pour les voyageurs pour accéder aux équipements 34, 36 qui y sont disposés, qui serait sinon occasionnée par la présence d'autres voyageurs devant les autres équipements 34, 36.

## Revendications

1. Mobilier (30) destiné à équiper un véhicule (10), le mobilier (30) comprenant un plateau (32) et une pluralité d'équipements (34, 36) de restauration disposés sur le plateau (32), le plateau (32) s'étendant dans un plan (XY) sensiblement horizontal et délimité par au moins un bord d'accès (38) au plateau (32), chaque équipement (34, 36) présentant une face frontale (39) disposée au voisinage du bord d'accès (38), le bord d'accès (38) définissant une pluralité de régions en retrait (40), la face frontale (39) de chaque équipement (34, 36) faisant face à une des régions en retrait (40), **caractérisé en ce que** chaque équipement (34, 36) est choisi parmi un four à micro-ondes (34) ou une machine à café (36).

2. Mobilier (30) selon la revendication 1, dans lequel, pour chaque région en retrait (40), un unique équipement (34, 36) est disposé avec sa face frontale (39) en regard de la région en retrait (40).

3. Mobilier (30) selon la revendication 1 ou 2, dans lequel chaque région en retrait (40) présente une forme sensiblement triangulaire dans le plan sensiblement horizontal (XY) du plateau (32).

4. Mobilier (30) selon l'une quelconque des revendications 1 à 3, dans lequel chaque région en retrait (40) présente une profondeur (p) supérieure ou égale à 150 mm dans le plan horizontal (XY) du plateau (32).

5. Mobilier (30) selon l'une quelconque des revendications 1 à 4, dans lequel le bord d'accès (38) définit au moins trois régions en retrait (40).

6. Véhicule (10) comprenant au moins une voiture (12) et un mobilier (30) selon l'une quelconque des revendications 1 à 5, dans lequel le mobilier (30) est disposé en regard d'une paroi (22) de la voiture (12), le bord d'accès (38) du plateau (32) s'étendant à une distance (d) inférieure ou égale à 1000 mm de la paroi (22).

7. Véhicule (10) selon la revendication 6, dans lequel la voiture (12) est une voiture restaurant et dans laquelle les équipements (34, 36) du mobilier (30) sont en accès libre pour des voyageurs à bord du véhicule (10).

8. Véhicule (10) selon la revendication 6 ou 7, dans lequel le véhicule (10) est un véhicule ferroviaire et la voiture (12) est une voiture à deux niveaux, le mobilier (30) étant situé à un niveau inférieur (14).

9. Mobilier selon la revendication 1 ou 2, dans lequel chaque région en retrait (40) présente une géométrie arrondie, de sorte que le bord d'accès (38) s'étend de manière sensiblement sinusoïdale.

## Patentansprüche

1. Mobiliar (30), das dazu bestimmt sind, ein Fahrzeug (10) auszustatten, das Mobiliar (30) umfassend eine Platte (32) und eine Vielzahl von Ausrüstungen (34, 36) für Restauration, die auf der Platte (32) angeordnet sind, wobei sich die Platte (32) in einer im Wesentlichen horizontalen Ebene (XY) erstreckt und durch mindestens einen Zugangsrand (38) zu der Platte (32) begrenzt wird, wobei jede Ausrüstung (34, 36) eine Vorderseite (39) aufweist, die in der Nähe des Zugangsrands (38) angeordnet ist, wobei der Zugangsrand (38) eine Vielzahl von zurückgesetzten Bereichen (40) definiert, wobei die Vorderseite (39) jeder Ausrüstung (34, 36) einem der zurückgesetzten Bereiche (40) zugewandt ist, **dadurch gekennzeichnet, dass** jede Ausrüstung (34, 36) ausgewählt ist aus einem Mikrowellenofen (34) oder einer Kaffeemaschine (36).

2. Mobiliar (30) nach Anspruch 1, wobei für jeden zurückgesetzten Bereich (40) eine einzige Ausrüstung (34, 36) mit ihrer Vorderseite (39) dem zurückgesetzten Bereich (40) zugewandt angeordnet ist.

3. Mobiliar (30) nach Anspruch 1 oder 2, wobei jeder zurückgesetzte Bereich (40) in der im Wesentlichen horizontalen Ebene (XY) der Platte (32) eine im Wesentlichen dreieckige Form aufweist.

4. Mobiliar (30) nach einem der Ansprüche 1 bis 3, wobei jeder zurückgesetzte Bereich (40) eine Tiefe (p) von 150 mm oder mehr in der horizontalen Ebene (XY) der Platte (32) aufweist.

5. Mobiliar (30) nach einem der Ansprüche 1 bis 4, wobei der Zugangsrand (38) mindestens drei zurückgesetzte Bereiche (40) definiert.

6. Fahrzeug (10), umfassend einen Wagen (12) und ein Mobiliar (30) nach einem der Ansprüche 1 bis 5, wobei das Mobiliar (30) gegenüber einer Wand (22) des Wagens (12) angeordnet ist, wobei sich der Zugangsrand (38) der Platte (32) in einem Abstand (d) von weniger als oder gleich wie 1000 mm von der Wand (22) erstreckt.

7. Fahrzeug (10) nach Anspruch 6, wobei der Wagen (12) ein Speisewagen ist und wobei die Ausrüstungen (34, 36) des Mobiliars (30) für Reisende an Bord des Fahrzeugs (10) frei zugänglich sind.

8. Fahrzeug (10) nach Anspruch 6 oder 7, wobei das Fahrzeug (10) ein Schienenfahrzeug ist und der Wagen (12) ein Doppelstockwagen ist, wobei sich das Mobiliar (30) auf einer unteren Ebene (14) befindet.

9. Mobiliar nach Anspruch 1 oder 2, wobei jeder zurückgesetzte Bereich (40) eine abgerundete Geometrie aufweist, sodass sich der Zugangsrand (38) im Wesentlichen sinusförmig erstreckt.

## Claims

1. A piece of furniture (30) for fitting to a vehicle (10), the piece of furniture (30) comprising a tray (32) and a plurality of items of foodservice equipment (34, 36) disposed on the tray (32), the tray (32) extending in a substantially horizontal plane (XY) and bounded by at least one access edge (38) to the tray (32), each item of equipment (34, 36) having a front face (39) disposed adjacent the access edge (38), the access edge (38) defining a plurality of recessed regions (40), the front face (39) of each piece of equipment (34, 36) facing one of the recessed regions (40), **characterised in that** each item of equipment (34, 36) is selected from a microwave oven (34) or a coffee machine (36).

2. The furniture (30) according to claim 1, wherein for each recessed region (40) a single item of equipment (34, 36) is arranged with its front face (39) facing the recessed region (40).

3. The furniture (30) according to claim 1 or 2, wherein each recessed region (40) is substantially triangular in shape in the substantially horizontal plane (XY) of the tray (32).

4. The furniture (30) according to any one of claims 1 to 3, wherein each recessed region (40) has a depth (p) greater than or equal to 150 mm in the horizontal plane (XY) of the tray (32).

5. The furniture (30) according to any of claims 1 to 4, wherein the access edge (38) defines at least three recessed regions (40).

6. A vehicle (10) comprising at least one car (12) and piece of furniture (30) according to any one of claims 1 to 5, wherein the furniture (30) is disposed opposite a wall (22) of the car (12), the access edge (38) of the tray (32) extending at a distance (d) less than or equal to 1000 mm from the wall (22).

7. The vehicle (10) according to claim 6, wherein the car (12) is a dining car and wherein the equipment (34, 36) of the furniture (30) is freely accessible to passengers on board the vehicle (10).

8. The vehicle (10) according to claim 6 or 7, wherein the vehicle (10) is a railway vehicle and the car (12) is a double-decker car, with the furniture (30) being located on a lower deck (14).

9. The furniture according to claim 1 or 2, wherein each recessed region (40) has a rounded geometry, such that the access edge (38) extends substantially sinusoidally.
